(19) Europäisches Patentamt
European Patent Office
Office européen des brevets

(11) **EP 3 069 436 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **14796506.5**

(22) Anmeldetag: **12.11.2014**

(51) Int Cl.:
***H02M 1/42*** *(2007.01)*

(86) Internationale Anmeldenummer:
**PCT/EP2014/074340**

(87) Internationale Veröffentlichungsnummer:
**WO 2015/071290 (21.05.2015 Gazette 2015/20)**

(54) **LEISTUNGSFAKTORKORREKTURSCHALTUNG, BETRIEBSGERÄT FÜR EIN LEUCHTMITTEL UND VERFAHREN ZUM STEUERN EINER LEISTUNGSFAKTORKORREKTURSCHALTUNG**

POWER FACTOR CORRECTION CIRCUIT, OPERATING DEVICE FOR A LAMP, AND METHOD FOR CONTROLLING A POWER FACTOR CORRECTION CIRCUIT

CIRCUIT DE CORRECTION DU FACTEUR DE PUISSANCE, APPAREIL DE COMMANDE D'UN MOYEN D'ÉCLAIRAGE ET PROCÉDÉ DE COMMANDE D'UN CIRCUIT DE CORRECTION DU FACTEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2013 DE 102013223096**

(43) Veröffentlichungstag der Anmeldung:
**21.09.2016 Patentblatt 2016/38**

(73) Patentinhaber: **Tridonic GmbH & Co. KG**
**6851 Dornbirn (AT)**

(72) Erfinder: **MARTE, Patrick**
**A-6840 Götzis (AT)**

(74) Vertreter: **Banzer, Hans-Jörg**
**Kraus & Weisert**
**Patentanwälte PartGmbB**
**Thomas-Wimmer-Ring 15**
**80539 München (DE)**

(56) Entgegenhaltungen:
EP-A1- 2 360 824        CN-A- 101 702 574
DE-A1-102004 051 162    DE-A1-102012 007 479
US-A1- 2009 303 765

**Beschreibung**

Die Erfindung betrifft eine Schaltung zur Leistungsfaktorkorrektur und ein Verfahren zum Steuern einer solchen Schaltung. Insbesondere betrifft die Erfindung das technische Gebiet der Leistungsfaktorkorrektur für den Einsatz bei Betriebsgeräten für Leuchtmittel.

Eine Leistungsfaktorkorrektur ("Power Factor Correction", PFC) wird eingesetzt, um Oberwellenströme in einem Eingangsstrom zu beseitigen oder zumindest zu verringern. Oberwellenströme können insbesondere bei nicht-linearen Verbrauchern, wie es beispielsweise Gleichrichter mit nachfolgender Glättung in Netzteilen sind, auftreten, da bei derartigen Verbrauchern der Eingangsstrom trotz der sinusförmigen Eingangsspannung in seiner Phase verschoben und nicht-sinusförmig verzerrt wird. Den dabei auftretenden höherfrequenten Oberschwingungen kann durch eine dem jeweiligen Gerät vorgeschaltete aktive oder getaktete Leistungsfaktorkorrekturschaltung entgegengewirkt werden.

Für Leistungsfaktorkorrekturschaltungen kann beispielsweise eine Schaltungstopologie verwendet werden, die auf der Topologie eines Aufwärtswandlers, eines Abwärtswandlers, eines Sperrwandlers oder eines anderen Wandlers beruht, wobei eingangsseitig ein Filter vorgesehen sein kann. Ein Schalter der Leistungsfaktorkorrekturschaltung kann getaktet geschaltet werden. Die Leistungsfaktorkorrekturschaltung kann eine Steuereinrichtung aufweisen, die die Stromaufnahme kontrolliert. Dazu kann beispielsweise eine Einschaltdauer, für die der Schalter jeweils in den Ein-Zustand geschaltet wird, um Energie in einer Spule zu speichern, eingestellt werden.

Leistungsfaktorkorrekturschaltungen werden bei Betriebsgeräten für Leuchtmittel eingesetzt, beispielsweise bei elektronischen Vorschaltgeräten oder LED-Konvertern. Die Verwendung derartiger Schaltungen bei Geräten zum Betreiben von Leuchtmitteln ist wünschenswert oder erforderlich, da Normen die zulässige Rücksendung von Oberwellen in das Versorgungsnetz beschränken.

Es ist wünschenswert, ein Betriebsgerät für ein Leuchtmittel für unterschiedliche Ausgangsleistungen zu verwenden. Beispielsweise kann es wünschenswert sein, die Ausgangsleistung eines Betriebsgeräts zu verändern, um ein dimmbares Leuchtmittel zu dimmen. Alternativ oder zusätzlich kann es wünschenswert sein, ein Betriebsgerät, beispielsweise einen LED-Konverter, zum Betreiben von Leuchtmitteln zu verwenden, die bei 100 % Dimmlevel (d.h. bei maximaler Helligkeit) eine unterschiedliche Leistungsaufnahme aufweisen. Dabei stellt es eine Herausforderung dar, eine gute Leistungsfaktorkorrektur über einen Bereich von Ausgangsleistungen des Betriebsgeräts sicherzustellen.

Aus DE 10 2012 007 479 A1 ist eine Leistungsfaktorkorrekturschaltung sowie ein Verfahren zum Steuern der Leistungsfaktorkorrekturschaltung gemäß dem Oberbegriff der unabhängigen Ansprüche bekannt.

Aus EP 2 360 824 A1 ist eine Leistungswandlungssteuereinrichtung zum Steuern der Betätigung eines Schalters in einer Leistungswandlungsschaltung bekannt, wobei die Leistungswandlungssteuereinrichtung dazu ausgestaltet ist, den Schalter gemäß einem variablen Frequenzbetriebsmodus zum Schalten von Frequenzen, welche größer als ein minimaler Schwellwert sind, sowie gemäß einem festen Frequenzbetriebsmodus bei einer Schaltfrequenz, welche dem minimalen Schwellwert entspricht, zu betreiben.

Aus CN 101 702 574 A ist ein eine Leistungsfaktorkorrektursteuerung bekannt, welche in einem Leistungsversorgungswandler verwendet wird. Hierin wird eine Steuerspannung gemäß einer Ausgangsspannung des Leistungsversorgungswandlers erzeugt, ein ersten kritischen Wert wird zum Erfassen der Steuerspannung erstellt, und die Leistungsfaktorkorrekturschaltung wird gesteuert, um in verschiedenen spezifischen Modi gemäß dem Unterschied in dem Ausmaß der Last zu arbeiten, wodurch der Verbrauch des Leistungsversorgungswandlers zwischen einer geringen Last und keiner Last verringert wird und die Energieübertragungseffizienz verbessert wird.

Aus US 2009/0303765 A1 ist ein schaltbares Spannungsquellensystem mit einem Leistungsfaktorkorrekturmodus bekannt, in welchem eine stabile Gleichspannungsquelle aus einer Wechselspannungsquelle ausgebildet wird und derart betrieben wird, dass eine Eingangsspannung und ein Eingangsstrom für eine Gleichstromstellschaltung ungefähr miteinander in Phase sind und ähnliche Wellenformen aufweisen.

Aus DE 10 2004 051 162 A1 ist ein Betriebsgerät für Leuchtmittel, insbesondere ein elektronisches Vorschaltgerät für Gasentladungslampen, bekannt, welches eine Leistungsfaktor-Korrekturschaltung zur Verringerung von Oberschwingungen bei der Eingangsstromaufnahme aufweist. Dabei wird eingangsseitig nur während vorbestimmter Zeitdauern Strom aufgenommen, und die vorbestimmte Zeitdauer der Stromaufnahme wird dabei bei eingangsseitigem Anliegen einer DC-Spannung moduliert.

Der Erfindung liegt die Aufgabe zugrunde, eine Schaltung und ein Verfahren zur Leistungsfaktorkorrektur bereitzustellen, die eine gute Unterdrückung von Oberschwingungen für unterschiedliche Lasten am Ausgang der Leistungsfaktorkorrekturschaltung erlauben. Insbesondere besteht ein Bedarf an derartigen Vorrichtungen und Verfahren, die eine gute Leistungsfaktorkorrektur auch dann bereitstellen, wenn ein Leuchtmittel gedimmt wird und/oder Verbraucher mit unterschiedlicher maximaler Leistungsaufnahme mit der Leistungsfaktorkorrekturschaltung verbunden werden.

Bei einer Leistungsfaktorkorrekturschaltung und einem Verfahren zum Steuern einer Leistungsfaktorkorrekturschaltung nach einem Ausführungsbeispiel wird eine Steuereinrichtung zum Steuern eines Schaltmittels verwendet. Die Steuereinrichtung weist wenigstens zwei unterschiedliche Konfigurationen zum Steuern des Schaltmittels auf. Eine Konfiguration wird in Abhängigkeit von einer Last an einem Ausgang der Leistungsfaktorkorrekturschaltung aus den wenigstens zwei unterschiedlichen Konfigurationen ausgewählt.

Durch Verwendung einer Steuereinrichtung mit mehreren unterschiedlichen Konfigurationen kann die Arbeitsweise der Steuereinrichtung und somit das Schalten des Schaltmittels abhängig von der Last angepasst werden. Die Konfiguration kann dynamisch angepasst werden, beispielsweise wenn bei einer Änderung eines Dimmlevels eine Laständerung erfolgt und als Antwort auf den Lastwechsel eine andere Konfiguration zum Erzeugen von Steuersignalen ausgewählt wird.

Bei Ausführungsbeispielen kann die Konfiguration, mit der die Steuereinrichtung das Schaltmittel steuert, so gewählt werden, dass die gesamte harmonische Verzerrung (THD, "Total Harmonic Distortion") für die jeweils vorliegende Last am Ausgang der Leistungsfaktorkorrekturschaltung in einem vorgegebenen Wertebereich liegt.

Die unterschiedlichen Konfigurationen können sich darin unterscheiden, wie das Schaltmittel in Abhängigkeit von einer Eingangsspannung der Leistungsfaktorkorrekturschaltung geschaltet wird. Beispielsweise kann eine Einschaltdauer, für die das Schaltmittel bei einem Wert der Eingangsspannung in den Ein-Zustand geschaltet wird, und/oder eine Ausschaltdauer für die das Schaltmittel bei dem jeweiligen Wert der Eingangsspannung in den Aus-Zustand geschaltet wird, von der Konfiguration abhängen und lastabhängig gewählt werden.

Eine Leistungsfaktorkorrekturschaltung nach einem Ausführungsbeispiel umfasst einen Eingang zum Empfangen einer Eingangsspannung, ein Schaltmittel und eine Steuereinrichtung. Die Steuereinrichtung weist wenigstens zwei unterschiedliche Konfigurationen zum Steuern des Schaltmittels abhängig von der Eingangsspannung auf. Eine Konfiguration zum Steuern des Schaltmittels ist aus den wenigstens zwei unterschiedlichen Konfigurationen in Abhängigkeit von einer Last an einem Ausgang der Leistungsfaktorkorrekturschaltung auswählbar. Eine Einschaltdauer, für die die Steuereinrichtung das Schaltmittel in einen Ein-Zustand schaltet, und/oder eine Ausschaltdauer, für die die Steuereinrichtung das Schaltmittel in einen Aus-Zustand schaltet, ist dabei bei wenigstens einem Wert der Eingangsspannung für die wenigstens zwei unterschiedlichen Konfigurationen verschieden. Die Steuereinrichtung ist dabei eingerichtet, um eine Ein-Zeit um ein Zeitintervall zu verlängern, um die Einschaltdauer zu bestimmen, wobei das Zusatzintervall bei wenigstens einem Wert der Eingangsspannung für die wenigstens zwei unterschiedlichen Konfigurationen verschieden ist, und wobei das Zusatzintervall für die wenigstens zwei unterschiedlichen Konfigurationen eine unterschiedliche Abhängigkeit von der Eingangsspannung aufweist.

Die Einschaltdauer und/oder Ausschaltdauer kann bei jedem Wert der Eingangsspannung für die wenigstens zwei unterschiedlichen Konfigurationen verschieden sein.

Die Einschaltdauer und/oder Ausschaltdauer kann für die wenigstens zwei unterschiedlichen Konfigurationen eine unterschiedliche Abhängigkeit von der Eingangsspannung aufweisen.

Die Steuereinrichtung kann eingerichtet sein, um eine Tabelle zum Bestimmen des Zusatzintervalls abhängig von der Last aus mehreren Tabellen auszuwählen.

Die Steuereinrichtung kann eingerichtet sein, um eine Prozedur zum Berechnen des Zusatzintervalls abhängig von der Last aus mehreren vordefinierten Prozeduren auszuwählen.

Die Steuereinrichtung kann eingerichtet sein, um die Ein-Zeit rechnerisch zu bestimmen.

Die Steuereinrichtung kann eingerichtet sein, um die Ein-Zeit abhängig von einer erfassten Ausgangsspannung der Leistungsfaktorkorrekturschaltung rechnerisch zu bestimmen.

Die Steuereinrichtung kann eingerichtet sein, um die Ein-Zeit als Stellwert einer Regelschleife für die Ausgangsspannung der Leistungsfaktorkorrekturschaltung oder einer Regelschleife für eine andere Ausgangskreisgröße anzupassen. Das von der Steuereinrichtung bestimmte Zusatzintervall kann bei jedem Wert der Eingangsspannung für die wenigstens zwei unterschiedlichen Konfigurationen verschieden sein.

Die Leistungsfaktorkorrekturschaltung kann wenigstens eine integrierte Halbleiterschaltung zum Bestimmen der Ein-Zeit und/oder zum Bestimmen des Zusatzintervalls umfassen.

Die Steuereinrichtung kann eingerichtet sein, um einen von der Last abhängigen Signalwert wiederholt abzufragen und um abhängig von dem Signalwert die Konfiguration auszuwählen. Die Konfiguration kann somit bei Laständerungen, beispielsweise bei einem Dimmvorgang, angepasst werden, um die gesamte harmonische Verzerrung in einem zulässigen Wertebereich zu halten.

Die Steuereinrichtung kann eingerichtet sein, um den von der Last abhängigen Signalwert periodisch abzufragen.

Die Steuereinrichtung kann eingerichtet sein, um den abgefragten Signalwert mit wenigstens einem Schwellenwert zu vergleich, um zu bestimmen, ob die Konfiguration gewechselt werden soll.

Der von der Last abhängige Signalwert kann die Ein-Zeit sein, die von einem Regler bestimmt wird. Die Ein-Zeit kann von einer integrierten Halbleiterschaltung, beispielsweise einem Controller oder einer anwendungsspezifischen integrierten Schaltung (ASIC), in einer Regelschleife festgelegt werden.

Der Signalwert kann eine Ausgangsleistung der Leistungsfaktorkorrekturschaltung repräsentieren.

Die wenigstens zwei unterschiedlichen Konfigurationen können eine erste Konfiguration und eine zweite Konfiguration umfassen. Die Steuereinrichtung kann eingerichtet sein, um von der zweiten Konfiguration zur ersten Konfiguration zum Steuern des Schaltmittels zu wechseln, wenn der Signalwert einen ersten Schwellenwert unterschreitet, und um von der ersten Konfiguration zur zweiten Konfiguration zum Steuern des Schaltmittels zu wechseln, wenn der Signalwert einen zweiten Schwellenwert übersteigt, der größer als der erste Schwellenwert ist. Auf diese Weise kann ein lastabhängiger Wechsel zwischen unterschiedlichen Konfigurationen mit einer Hysterese ausgeführt werden.

Die Steuereinrichtung kann so eingerichtet sein, dass bei einem lastabhängigen Wechsel der Konfiguration die gesamte harmonische Verzerrung (THD) verringert wird. Die Steuereinrichtung kann so eingerichtet sein, dass die THD bei einer Steuerung des Schaltmittels in der ersten Konfiguration kleiner als die THD bei einer Steuerung des Schaltmittels in der zweiten Konfiguration ist, wenn der Signalwert den ersten Schwellenwert unterschreitet. Die Steuereinrichtung kann so eingerichtet sein, dass die THD bei einer Steuerung des Schaltmittels in der zweiten Konfiguration kleiner als die THD bei einer Steuerung des Schaltmittels in der ersten Konfiguration ist, wenn der Signalwert den zweiten Schwellenwert übersteigt.

Die Steuereinrichtung kann mehr als zwei unterschiedliche Konfigurationen aufweisen. Ein lastabhängiges Wechseln zwischen jeweils zwei Konfigurationen kann bei unterschiedlichen Schwellenwerten mit einer Hysterese erfolgen.

Die Steuereinrichtung kann als integrierte Halbleiterschaltung ausgestaltet sein oder kann wenigstens eine integrierte Halbleiterschaltung umfassen. Die Steuereinrichtung kann wenigstens einen Controller, wenigstens eine anwendungsspezifische integrierte Schaltung (ASIC), wenigstens einen Prozessor oder eine

Kombination derartiger Komponenten umfassen.

Die Leistungsfaktorkorrekturschaltung kann eine mit dem Eingang gekoppelte Induktivität umfassen, wobei das Schaltmittel steuerbar ist, um die Induktivität wahlweise zu laden und zu entladen.

Die Leistungsfaktorkorrekturschaltung kann ein Filter umfassen, das zwischen den Eingang und die Induktivität geschaltet ist.

Nach einem weiteren Ausführungsbeispiel wird eine Steuereinrichtung für eine Leistungsfaktorkorrekturschaltung angegeben. Die Steuereinrichtung weist wenigstens zwei unterschiedliche Konfigurationen zum Steuern des Schaltmittels abhängig von der Eingangsspannung auf. Eine Konfiguration zum Steuern des Schaltmittels ist aus den wenigstens zwei unterschiedlichen Konfigurationen in Abhängigkeit von einer Last an einem Ausgang der Leistungsfaktorkorrekturschaltung auswählbar.

Die Steuereinrichtung kann die weiteren Merkmale aufweisen, die unter Bezugnahme auf die Leistungsfaktorkorrekturschaltung beschrieben wurden.

Die Steuereinrichtung kann zur Verwendung bei einer Leistungsfaktorkorrekturschaltung nach einem Ausführungsbeispiel eingerichtet sein.

Ein Betriebsgerät für ein Leuchtmittel nach einem Ausführungsbeispiel umfasst die Leistungsfaktorkorrekturschaltung nach einem Ausführungsbeispiel.

Das Betriebsgerät kann ein LED-Konverter sein.

Nach einem weiteren Ausführungsbeispiel wird ein System angegeben, das ein Leuchtmittel und die Leistungsfaktorkorrekturschaltung nach einem Ausführungsbeispiel umfasst. Das System kann einen Ausgangskreis umfassen, der zwischen die Leistungsfaktorkorrekturschaltung und das Leuchtmittel geschaltet ist.

Nach einem weiteren Ausführungsbeispiel wird ein Verfahren zum Steuern einer Leistungsfaktorkorrekturschaltung angegeben, die einen Eingang zum Empfangen einer Eingangsspannung, ein Schaltmittel und eine Steuereinrichtung zum Steuern des Schaltmittels umfasst. Bei dem Verfahren wird eine Konfiguration aus wenigstens zwei unterschiedlichen Konfigurationen der Steuereinrichtung ausgewählt, wobei die Konfiguration abhängig von einer Last an einem Ausgang der Leistungsfaktorkorrekturschaltung ausgewählt wird. Das Schaltmittel wird abhängig von der Eingangsspannung gemäß der ausgewählten Konfiguration zeitabhängig von der Steuereinrichtung gesteuert.

Das Verfahren kann mit einer Leistungsfaktorkorrekturschaltung nach einem Ausführungsbeispiel durchgeführt werden.

Bei dem Verfahren kann eine Einschaltdauer, für die die Steuereinrichtung das Schaltmittel in einen Ein-Zustand schaltet, und/oder eine Ausschaltdauer, für die die Steuereinrichtung das Schaltmittel in einen Aus-Zustand schaltet, bei wenigstens einem Wert der Eingangsspannung von der jeweils ausgewählten Konfiguration abhängen.

Bei dem Verfahren können die Einschaltdauer und/oder die Ausschaltdauer bei jedem Wert der Eingangsspannung von der jeweils ausgewählten Konfiguration abhängen.

Bei dem Verfahren kann die Einschaltdauer und/oder die Ausschaltdauer für die wenigstens zwei unterschiedlichen Konfigurationen eine unterschiedliche Abhängigkeit von der Eingangsspannung aufweisen.

Die Steuereinrichtung kann eine Ein-Zeit, die von einem Regler bestimmt werden kann, um ein Zusatzintervall verlängern, um die Einschaltdauer zu bestimmen. Das Zusatzintervall kann so gewählt werden, dass die gesamte Harmonische Verzerrung verringert wird.

Die Steuereinrichtung kann eine Tabelle zum Bestimmen des Zusatzintervalls abhängig von der Last aus mehreren Tabellen auswählen.

Die Steuereinrichtung kann eine Prozedur zum Berechnen des Zusatzintervalls abhängig von der Last aus mehreren vordefinierten Prozeduren auswählen. Beispielsweise kann die Steuereinrichtung einen Parameter einer Rechenvorschrift zum Berechnen des Zusatzintervalls abhängig von der Last verändern.

Das Zusatzintervall kann für die wenigstens zwei unterschiedlichen Konfigurationen eine unterschiedliche Abhängigkeit von der Eingangsspannung aufweisen.

Die Steuereinrichtung kann die Ein-Zeit rechnerisch bestimmen.

Die Steuereinrichtung kann die Ein-Zeit abhängig von einer erfassten Ausgangsspannung der Leistungsfaktorkorrekturschaltung rechnerisch bestimmen.

Die Steuereinrichtung kann die Ein-Zeit als Stellwert einer Regelschleife für die Ausgangsspannung der Leistungsfaktorkorrekturschaltung oder einer Regelschleife für eine andere Ausgangskreisgröße anpassen.

Das von der Steuereinrichtung bestimmte Zusatzintervall kann bei wenigstens einem Wert der Eingangsspannung für die wenigstens zwei unterschiedlichen Konfigurationen verschieden sein.

Das von der Steuereinrichtung bestimmte Zusatzintervall kann bei jedem Wert der Eingangsspannung für die wenigstens zwei unterschiedlichen Konfigurationen verschieden sein.

Die Ein-Zeit und/oder das Zusatzintervall können von wenigstens einer integrierten Halbleiterschaltung bestimmt werden.

Die Steuereinrichtung kann einen von der Last abhängigen Signalwert wiederholt abfragen und abhängig von dem Signalwert die Konfiguration auswählen. Die Konfiguration kann somit bei Laständerungen, beispielsweise bei einem Dimmvorgang, adaptiv angepasst werden.

Die Steuereinrichtung kann den von der Last abhängigen Signalwert periodisch abfragen.

Der von der Last abhängige Signalwert kann die Ein-Zeit sein. Die Ein-Zeit kann von einer integrierten Halbleiterschaltung, beispielsweise einem Controller oder einer anwendungsspezifischen integrierten Schaltung (ASIC), in einer Regelschleife festgelegt werden.

Der Signalwert kann eine Ausgangsleistung der Leistungsfaktorkorrekturschaltung repräsentieren.

Die Steuereinrichtung kann den Signalwert mit wenigstens einem Schwellenwert vergleichen, um zu bestimmen, ob die Konfiguration gewechselt werden soll. Die Steuereinrichtung kann die Konfiguration dann wechseln, wenn mit dem Wechsel der Konfiguration eine Verringerung der gesamten harmonischen Verzerrung (THD) erreicht wird.

Die wenigstens zwei unterschiedlichen Konfigurationen können eine erste Konfiguration und eine zweite Konfiguration umfassen. Die Steuereinrichtung kann von der zweiten Konfiguration zur ersten Konfiguration zum Steuern des Schaltmittels wechseln, wenn der Signalwert einen ersten Schwellenwert unterschreitet, und kann von der ersten Konfiguration zur zweiten Konfiguration zum Steuern des Schaltmittels wechseln, wenn der Signalwert einen zweiten Schwellenwert übersteigt, der größer als der erste Schwellenwert ist. Auf diese Weise kann ein lastabhängiger Wechsel zwischen unterschiedlichen Konfigurationen mit einer Hysterese ausgeführt werden.

Die Steuereinrichtung kann durch einen lastabhängigen Wechsel der Konfiguration die gesamte harmonische Verzerrung (THD) verringern. Die Steuereinrichtung kann so eingerichtet sein, dass die THD bei einer Steuerung des Schaltmittels in der ersten Konfiguration kleiner als die THD bei einer Steuerung des Schaltmittels in der zweiten Konfiguration ist, wenn der Signalwert den ersten Schwellenwert unterschreitet. Die Steuereinrichtung kann so eingerichtet sein, dass die THD bei einer Steuerung des Schaltmittels in der zweiten Konfiguration kleiner als die THD bei einer Steuerung des Schaltmittels in der ersten Konfiguration ist, wenn der Signalwert den zweiten Schwellenwert übersteigt.

Die Steuereinrichtung kann mehr als zwei unterschiedliche Konfigurationen aufweisen. Ein lastabhängiges Schalten zwischen jeweils zwei Konfigurationen kann bei unterschiedlichen Schwellenwerten mit einer Hysterese erfolgen.

Die Steuereinrichtung kann eine integrierte Halbleiterschaltung sein oder kann wenigstens eine integrierte Halbleiterschaltung umfassen. Die Steuereinrichtung kann wenigstens einen Controller, wenigstens eine anwendungsspezifische integrierte Schaltung (ASIC), wenigstens einen Prozessor oder eine Kombination derartiger Komponenten umfassen.

Die Leistungsfaktorkorrekturschaltung kann eine mit dem Eingang gekoppelte Induktivität umfassen, wobei das Schaltmittel gesteuert wird, um die Induktivität wahlweise zu laden und zu entladen. Die Leistungsfaktorkorrekturschaltung kann ein Filter umfassen, das zwischen den Eingang und die Induktivität geschaltet ist.

Bei Vorrichtungen und Verfahren nach Ausführungsbeispielen kann die Arbeitsweise der Leistungsfaktorkorrekturschaltung lastabhängig verändert werden. Dies kann auf einfache Weise durch die Verwendung einer Steuereinrichtung, die zwischen unterschiedlichen Konfigurationen umkonfigurierbar ist, erreicht werden.

Die Erfindung wird nachfolgend unter Bezugnahme auf die Zeichnungen anhand bevorzugter Ausführungsbeispiele erläutert.

Figur 1 zeigt ein Beleuchtungssystem mit einer Leistungsfaktorkorrekturschaltung nach einem Ausführungsbeispiel.

Figur 2 zeigt ein Schaltbild einer Leistungsfaktorkorrekturschaltung nach einem Ausführungsbeispiel.

Figur 3 ist eine schematische Darstellung eines von einer Steuereinrichtung der Leistungsfaktorkorrekturschaltung nach einem Ausführungsbeispiel ausgegebenen Steuersignals zur Erläuterung der Wirkungsweise der Leistungsfaktorkorrekturschaltung.

Figur 4 ist ein Flussdiagramm eines Verfahrens nach einem Ausführungsbeispiel.

Figur 5 zeigt eine Einschaltdauer des Schaltmittels, die bei einer Leistungsfaktorkorrekturschaltung nach einem Ausführungsbeispiel lastabhängig festgelegt wird.

Figur 6 zeigt ein Blockdiagramm einer Steuereinrichtung einer Leistungsfaktorkorrekturschaltung nach einem Ausführungsbeispiel.

Figur 7 zeigt ein Blockdiagramm einer Steuereinrichtung einer Leistungsfaktorkorrekturschaltung nach einem weiteren Ausführungsbeispiel.

Figur 8 veranschaulicht ein lastabhängiges Wechseln zwischen unterschiedlichen Konfigurationen bei einer Leistungsfaktorkorrekturschaltung nach einem Ausführungsbeispiel.

Die Erfindung wird nachfolgend anhand von Ausführungsbeispielen unter Bezugnahme auf die Figuren näher beschrieben, in denen identische Bezugszeichen identische oder korrespondierende Elemente repräsentieren. Die Merkmale verschiedener Ausführungsbeispiele können miteinander kombiniert werden, sofern dies in der Beschreibung nicht ausdrücklich ausgeschlossen wird. Auch wenn einige Ausführungsbeispiele im Kontext spezifischer Anwendungen, beispielsweise im Kontext von LED-Konvertern mit einer Leistungsfaktorkorrekturschaltung, näher beschrieben werden, sind die Ausführungsbeispiele nicht auf diese Anwendungen beschränkt.

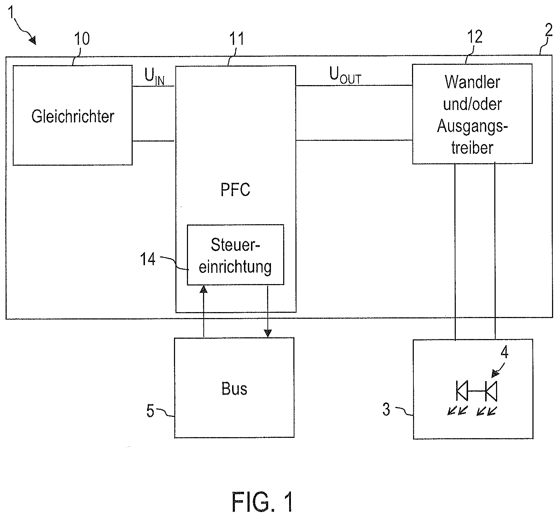

Figur 1 zeigt eine Blockdiagrammdarstellung eines Beleuchtungssystems 1, das ein Betriebsgerät 2 für ein Leuchtmittel 3 umfasst. Das Leuchtmittel 3 kann beispielsweise eine Leuchtdiode (LED) oder mehrere LEDs umfasst. Die LEDs 4 können anorganische oder organische LEDs sein. Das Betriebsgerät 2 kann optional mit einem Bus 5 oder einem Drahtloskommunikationssystem verbunden sein, um Dimmbefehle zu empfangen und/oder Statusmeldungen auszugeben.

Das Betriebsgerät 2 kann beispielsweise als LED-Konverter ausgestaltet sein. Das Betriebsgerät 2 weist einen Gleichrichter 10 zum Gleichrichten einer Versorgungsspannung, beispielsweise der Netzspannung, auf. Das Betriebsgerät 2 weist eine Leistungsfaktorkorrekturschaltung 11 auf. Die Leistungsfaktorkorrekturschaltung 11 stellt eine Ausgangsspannung bereit. Eine weitere Spannungsumsetzung und/oder Dimmfunktionen können optional über einen DC/DC-Wandler und/oder einen Ausgangstreiber 12 erreicht werden. Eine Steuereinrichtung 14 kann verschiedene Steuer- oder Regelfunktionen erfüllen.

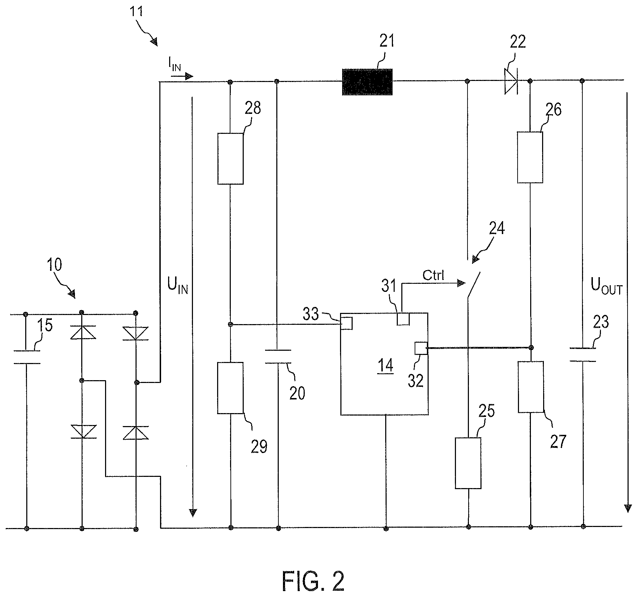

Die Funktionsweise der Leistungsfaktorkorrekturschaltung 11 nach Ausführungsbeispielen wird unter Bezugnahme auf Figur 2-8 ausführlicher beschrieben. Allgemein weist die Steuereinrichtung 14 mehrere Konfigurationen auf, in denen die Steuereinrichtung 14 ein Schaltmittel der Leistungsfaktorkorrekturschaltung 11 jeweils in den Ein-Zustand und den Aus-Zustand schalten kann. Die Einschaltdauer und/oder einer Ausschaltdauer des Schaltmittels kann abhängig von der Konfiguration in unterschiedlicher Weise von einer Eingangsspannung der Leistungsfaktorkorrekturschaltung 11 abhängen. Die jeweils verwendete Konfiguration kann abhängig von einer Last am Ausgang der Leistungsfaktorkorrekturschaltung 11 festgelegt werden. Bei einer Änderung der Last kann die gewählte Konfiguration entsprechend angepasst werden, indem lastabhängig eine andere Konfiguration festgelegt wird. Die jeweils verwendete Konfiguration der Steuereinrichtung 14 kann automatisch so festgelegt werden, dass die Leistungsfaktorkorrektur auf die Last abgestimmt ist. So kann erreicht werden, dass eine gesamte harmonische Verzerrung (THD, "Total Harmonic Distortion") in einem zulässigen Wertebereich bleibt, wie er beispielsweise durch die Norm EN 61000-3-2 definiert ist, auch wenn die Last über einen größeren Bereich veränderlich ist.

Während in Figur 1 schematisch ein Betriebsgerät dargestellt ist, bei dem die Leistungsfaktorkorrekturschaltung 11 eine Busspannung an andere Komponenten des Betriebsgeräts 2 bereitstellt, kann die Leistungsfaktorkorrekturschaltung nach Ausführungsbeispielen auch als isolierte Leistungsfaktorkorrekturschaltung mit nachgeschalteter Treiberstufe verwendet werden.

Figur 2 ist ein Schaltbild der Leistungsfaktorkorrekturschaltung 11 nach einem Ausführungsbeispiel. Eine Versorgungs-Wechselspannung, beispielsweise die Netzspannung, kann mit einem Kondensator 15 geglättet und von dem Gleichrichter 10 in eine gleichgerichtete Wechselspannung umgesetzt, die als Eingangsspannung $U_{IN}$ am Eingang der Leistungsfaktorkorrekturschaltung 11 anliegt.

Beispielhaft dargestellt ist eine Leistungsfaktorkorrekturschaltung 11 mit einer Schaltungstopologie, die auf der Schaltungstopologie eines Aufwärtswandlers beruht. Die Leistungsfaktorkorrekturschaltung 11 weist entsprechend eine mit dem Eingang verbundene Induktivität 21, eine Diode 22 und ein Schaltmittel 24 auf. Die Leistungsfaktorkorrekturschaltung 11 weist ein Filter auf, das beispielsweise durch einen Eingangskondensator 20 gebildet werden kann. Die Induktivität 21 ist mit einer Diode 22 zwischen dem Eingangsanschluss und einem Ausgangsanschluss der Leistungsfaktorkorrekturschaltung 11 in Serie geschaltet. An dem mit einem Ausgangskondensator 23 gekoppelten Ausgangsanschluss wird eine Ausgangs-Gleichspannung $U_{OUT}$ bereitgestellt. Die Ausgangs-Gleichspannung $U_{OUT}$ dient zur Versorgung einer Last, welcher die Leistungsfaktorkorrekturschaltung 11 vorgeschaltet ist. Bei der Last kann es sich beispielsweise um einen Gleichspannungs-Gleichspannungswandler mit damit verbundenem Leuchtmittel handeln. Die Last kann auch eine Treiberstufe für ein Leuchtmittel sein.

An die Verbindung zwischen der Induktivität 21 und der Diode 22 ist ein steuerbarer Schalter 24 angeschlossen, der als Schaltmittel dient. Der steuerbare Schalter 24 kann über einen Shunt-Widerstand 25 mit Masse verbunden sein. Der Schalter 24 ist ein steuerbarer elektronischer Schalter. Der Schalter 24 kann ein Leistungsschalter sein. Der Schalter 24 kann ein Transistor mit isolierter Gateelektrode sein und kann beispielsweise als Feldeffekttransistor (FET), insbesondere als MOSFET, ausgebildet sein. Der Schalter 24 wird von der Steuereinrichtung 14 der Leistungsfaktorkorrekturschaltung 11 in den Ein-Zustand und den Aus-Zustand geschaltet. Die Steuereinrichtung 14 weist einen entsprechenden Ausgang 31 zum Aussteuern eines Steuersignals Ctrl auf, mit dem beispielsweise eine Gatespannung des Schalters 24 kontrolliert werden kann.

Im eingeschalteten Zustand des Schalters 24 ist die Induktivität 21 über den Schalter 24 mit Masse verbunden, wobei die Diode 22 sperrt, so dass die Induktivität 21 aufgeladen und Energie in der Induktivität 21 gespeichert wird. Ist hingegen der Schalter 24 in den Aus-Zustand geschaltet, d.h. offen, ist die Diode 22 leitend, so dass sich die Induktivität 21 über die Diode 22 in den Ausgangskondensator 23 entladen kann und die in der Induktivität 21 gespeicherte Energie in den Ausgangskondensator 23 übertragen wird.

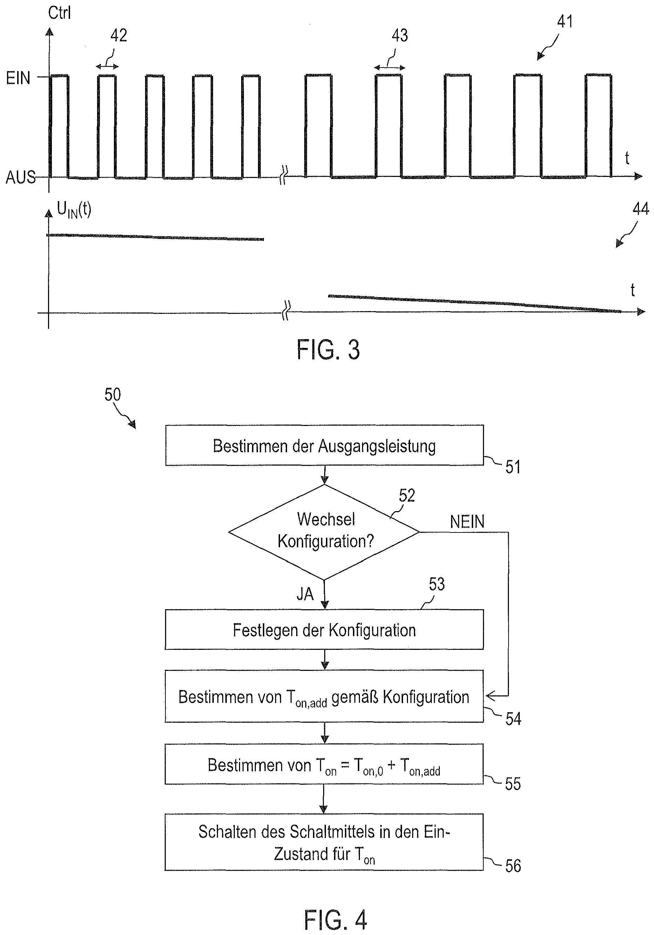

Der Schalter 24 wird von der Steuereinrichtung 14 angesteuert, die wenigstens eine integrierte Schaltung, insbesondere wenigstens einen Controller und/oder wenigstens eine anwendungsspezifische integrierte Schaltung (ASIC) umfassen kann. Die Leistungsfaktorkorrektur wird durch wiederholtes Ein- und Ausschalten des Schalters 24 erzielt, wobei die Schaltfrequenz für den Schalter 24 viel größer als die Frequenz der gleichgerichteten Eingangs-Wechselspannung $U_{IN}$ ist. Die Funktionsweise der Steuereinrichtung 14 wird unter Bezugnahme auf Figur 3 bis Figur 8 noch ausführlich beschrieben.

Während in Figur 2 beispielhaft eine Topologie der Leistungsfaktorkorrekturschaltung dargestellt ist, die auf der Topologie eines Aufwärtswandlers beruht, können die hier offenbarten Ausführungsbeispiele zum Steuern des Schalters 24 auch auf eine Vielzahl anderer Leistungsfaktorkorrekturschaltungen angewendet werden. Beispielsweise kann die beschrieben Ansteuerung des Schalters 24 auch bei Leistungsfaktorkorrekturschaltungen verwendet werden, die auf der Topologie eines Abwärtswandlers oder eines Sperrwandlers beruhen.

Die Steuereinrichtung 14 ist allgemein so ausgestaltet, dass sie das Steuersignal Ctrl zum Ansteuern des Schalters 24 erzeugt. Die Steuereinrichtung 14 kann das Steuersignal abhängig von dem aktuellen Wert der Eingangsspannung $U_{IN}$ der Leistungsfaktorkorrekturschaltung erzeugen. Die Erzeugung des Steuersignals und insbesondere eine Einschaltdauer, für die der Schalter 24 in den Ein-Zustand geschaltet wird, und/oder eine Ausschaltdauer, für die der Schalter 24 in den Aus-Zustand geschaltet wird, in Abhängigkeit von der Eingangsspannung $U_{IN}$ kann davon abhängen, in welcher von mehreren Konfigurationen sich die Steuereinrichtung 14 befindet. Die Steuereinrichtung 14 kann beispielsweise einen von einem Regler bestimmten Wert $T_{on,0}$, der nachfolgend auch als Ein-Zeit bezeichnet wird und einen Ausgangswert für die Bestimmung der Einschaltdauer darstellt, um ein Zusatzintervall verlängern, dessen Dauer sowohl vom aktuellen Wert der Eingangsspannung $U_{IN}$ als auch von der Konfiguration abhängt, in der sich die Steuereinrichtung 14 befindet. Die Konfiguration wird abhängig von der Last am Ausgang der Leistungsfaktorkorrekturschaltung festgelegt.

Bei einem Lastwechsel, der beispielsweise durch einen Dimmvorgang hervorgerufen werden kann, kann die Steuereinrichtung 14 automatisch überprüfen, ob ein Wechsel in eine andere Konfiguration erfolgen soll, um die gesamte harmonische Verzerrung (THD) in einem vorgegebenen Wertebereich zu halten. Die Konfiguration kann dynamisch und im laufenden Betrieb an Lastwechsel angepasst werden, um die gesamte harmonische Verzerrung (THD) in einem vorgegebenen Wertebereich zu halten.

Die Verlängerung der von einem Regler bestimmten Ein-Zeit $T_{on,0}$ um ein Zusatzintervall, das einen Korrekturterm definiert und zur weiteren Verringerung von Oberschwingungen dient, kann für dieselbe Eingangsspannung $U_{IN}$ abhängig davon unterschiedlich erfolgen, welche Last mit dem Ausgang der Leistungsfaktorkorrekturschaltung verbunden ist. Dadurch kann die Verringerung von Oberwellen adaptiv an unterschiedliche Lasten angepasst werden. Eine gute THD kann über einen größeren Bereich von Ausgangsleistungen der Leistungsfaktorkorrekturschaltung erreicht werden.

Verschiedene Ausgestaltungen sind möglich, mit denen die Steuereinrichtung 14 die Einschaltdauer bestimmen kann. Die Steuereinrichtung 14 kann einen Eingang 32 aufweisen, an dem über einen ohmschen Spannungsteiler mit Widerständen 26, 27 die Ausgangsspannung erfasst wird. Die Steuereinrichtung 14 kann einen Regler umfassen, der abhängig von der Ausgangsspannung oder einer anderen Ausgangskreisgröße Werte für die Ein-Zeit $T_{on,0}$ bestimmt.

Der von dem Regler bestimmte Wert für die Ein-Zeit $T_{on,0}$ kann von der Steuereinrichtung 14 auch verwendet werden, um die Ausgangsleistung der Leistungsfaktorkorrekturschaltung 11 und somit die Last zu bestimmen. Abhängig von der Last kann die Steuereinrichtung 14 automatisch festlegen, welche Konfiguration zur Verringerung der gesamten harmonischen Verzerrung verwendet werden soll.

Die Steuereinrichtung 14 kann einen weiteren Eingang 33 aufweisen, an dem über einen weiteren ohmschen Spannungsteiler mit Widerständen 28, 29 die Eingangsspannung $U_{IN}$ erfasst wird. Die Steuereinrichtung 14 kann aus dem am weiteren Eingang 33 empfangenen Signal abhängig von der Konfiguration, die zur Verringerung der gesamten harmonischen Verzerrung festgelegt ist, das Zusatzintervall bestimmen, um das der vom Regler bestimmte Wert für die Ein-Zeit $T_{on,0}$ verlängert wird.

Die Steuereinrichtung 14 kann die Eingangsspannung $U_{IN}$ auch auf andere Weise erfassen, beispielsweise mit Hilfe einer Sekundärwicklung an der Induktivität 21.

Figur 3 veranschaulicht die Funktionsweise der Steuereinrichtung 14. Figur 3 zeigt ein von der Steuereinrichtung 14 ausgesteuertes Steuersignal 41 und die Eingangsspannung 44 der Leistungsfaktorkorrekturschaltung als Funktion der Zeit. Die Steuereinrichtung 14 bewirkt, dass der Schalter 24 jeweils für eine von der Steuereinrichtung 14 bestimmte Einschaltdauer in den Ein-Zustand geschaltet wird. Das entsprechende Steuersignal 41 zum Schalten des Schalters 24 wird von der Steuereinrichtung 14 abhängig von dem aktuellen Wert der Eingangsspannung 44 bestimmt. Beispielsweise kann ein von einem Regler bestimmter Wert $T_{on,0}$ für die Ein-Zeit um ein Zusatzintervall verlängert werden, dessen Dauer von dem aktuellen Wert der Eingangsspannung abhängt. Entsprechend können für unterschiedliche Werte der Eingangsspannung $U_{IN}$ unterschiedliche Einschaltdauern 42 und 43 resultieren.

Die Bestimmung der Einschaltdauer 42, 43 kann für unterschiedliche Konfigurationen zur Verringerung der THD auf unterschiedliche Weise erfolgen. Beispielsweise kann zur Bestimmung des Zusatzintervalls, um das ein von einem Regler ermittelter Wert für die Ein-Zeit verlängert wird, eine Tabelle ausgelesen und/oder eine Rechenvorschrift verwendet und/oder ein Schaltungspfad aktiviert werden, die bzw. der abhängig davon ausgewählt wird, welche Last am Ausgang der Leistungsfaktorkorrekturschaltung vorhanden ist.

Figur 4 ist ein Flussdiagramm eines Verfahrens 50 nach einem Ausführungsbeispiel. Das Verfahren 50 kann von der Steuereinrichtung 14 durchgeführt werden.

Bei Schritt 51 wird eine Ausgangsleistung der Leistungsfaktorkorrekturschaltung bestimmt. Beispielsweise kann der von einem Regler festgelegte Wert $T_{on,0}$ für die Ein-Zeit des Schalters der Leistungsfaktorkorrekturschalter als ein Signalwert verwendet werden, der die Ausgangsleistung repräsentiert. Der von dem Regler festgelegte Wert $T_{on,0}$ für die Ein-Zeit des Schalters ist zur Ausgangsleistung proportional. Andere analoge oder digitale Signalwerte, die von der Ausgangsleistung abhängen, können verwendet werden, um die Ausgangsleistung zu bestimmen.

Bei Schritt 52 wird bestimmt, ob die Konfiguration gewechselt werden soll, die die Steuereinrichtung 14 zur Verringerung der THD verwendet. Das Bestimmen bei Schritt 52 kann einen Vergleich mit wenigstens einem Schwellenwert umfassen. Es kann bestimmt werden, dass die Konfiguration gewechselt werden soll, wenn der die Ausgangsleistung repräsentierende Signalwert einen Schwellenwert unterschreitet oder überschreitet. Der Schwellenwert kann davon abhängen, welche Konfiguration aktuell von der Steuereinrichtung 14 zum Steuern des Schalters 24 verwendet wird. Dadurch kann ein hysteretisches Umschalten zwischen unterschiedlichen Konfigurationen erreicht werden. Falls bei Schritt 52 bestimmt wird, dass die aktuelle Konfiguration weiter verwendet werden kann, beispielsweise weil kein Lastwechsel vorliegt, kann das Verfahren bei Schritt 54 fortgesetzt werden.

Falls bei Schritt 52 bestimmt wird, dass eine andere als die aktuelle Konfiguration zum Steuern des Schalters 24 verwendet werden soll, kann bei Schritt 53 die neue Konfiguration der Steuereinrichtung 14 festgelegt werden. Zum Festlegen der Konfiguration kann ein Vergleich der bei Schritt 51 bestimmten Ausgangsleistung mit wenigstens einem Schwellenwert erfolgen. Beispielsweise kann der von dem Regler festgelegte Wert $T_{on,0}$ für die Ein-Zeit des Schalters mit einem Schwellenwert oder mit mehreren Schwellenwerten verglichen werden, um zu bestimmen, mit welcher Konfiguration die Steuereinrichtung 14 Steuersignale zum Steuern des Schalters 24 erzeugen soll.

Das Festlegen einer Konfiguration bei Schritt 53 kann das Auswählen einer Tabelle aus mehreren Tabellen umfassen, wobei die ausgewählte Tabelle zum Bestimmen einer Einschaltdauer und/oder einer Ausschaltdauer verwendet wird. Das Festlegen einer Konfiguration bei Schritt 53 kann das Festlegen eines Parameters einer Rechenvorschrift oder einer anderen Prozedur umfassen, mit der die Steuereinrichtung 14 die Einschaltdauer und/oder die Ausschaltdauer bestimmt.

Bei Schritt 54 kann entsprechend der festgelegten Konfiguration der Steuereinrichtung ein Zusatzintervall $T_{on,add}$ bestimmt werden, um das der von dem Regler festgelegte Wert $T_{on,0}$ für die Ein-Zeit des Schalters verlängert wird. Das Zusatzintervall kann von dem aktuellen Wert der Eingangsspannung abhängen. Das Zusatzintervall $T_{on,add}$ kann für die jeweilige Eingangsspannung gemäß einer Prozedur bestimmt werden, die von der festgelegten Konfiguration und somit von der Last am Ausgang der Leistungsfaktorkorrekturschaltung abhängt.

Bei Schritt 55 kenn die Einschaltdauer $T_{on}$ für den Schalter bestimmt werden. Dazu kann der von dem Regler festgelegte Wert $T_{on,0}$ für die Ein-Zeit des Schalters um das Zusatzintervall $T_{on,add}$ verlängert werden. Die Einschaltdauer $T_{on}$ kann bestimmt werden als

$$T_{on} = T_{on,0} + T_{on,add} \ .$$
(1)

In der so bestimmten Einschaltdauer hängt der Term $T_{on,add}$ auf einer Weise von der Eingangsspannung ab, die durch die Konfiguration der Steuereinrichtung 14 festgelegt wird.

Bei Schritt 56 kann der Schalter 24 für eine Einschaltdauer in den Ein-Zustand geschaltet werden, die gemäß Gleichung (1) bei Schritt 55 ermittelt wurde. Die Steuerung des Schalters 24 hängt von der Konfiguration ab, die von der Steuereinrichtung 14 verwendet wird, um den Schalter 24 anzusteuern.

Die Schritte 55 und 56 können mehrfach wiederholt werden, bevor das Verfahren 50 zu Schritt 51 zurückkehrt. Beispielsweise kann die Steuereinrichtung 14 den Schalter 24 mehrfach für eine Einschaltdauer, die jeweils bei Schritt 55 ermittelt wird, in den Ein-Zustand schalten, bevor bei den Schritten 51 und 52 überprüft wird, ob die Konfiguration gewechselt werden soll.

Die Bestimmung der Ausgangsleistung, beispielsweise durch Abfragen des durch einen Regler festgelegten Werts $T_{on,0}$ für die Ein-Zeit des Schalters, und eine etwaige Änderung der Konfiguration kann während des laufenden Betriebs der Leistungsfaktorkorrekturschaltung 11 wiederholt werden. Die Ausgangsleistung kann, beispielsweise durch Abfrage des durch einen Regler festgelegten Werts $T_{on,0}$ für die Ein-Zeit des Schalters, periodisch bestimmt werden. Es kann periodisch überprüft werden, ob die Konfiguration geändert werden soll. Dadurch kann eine Anpassung der Konfiguration an die jeweilige Last erfolgen, beispielsweise wenn aufgrund eines Dimmvorgangs die Ausgangsleistung der Leistungsfaktorkorrekturschaltung verringert wurde.

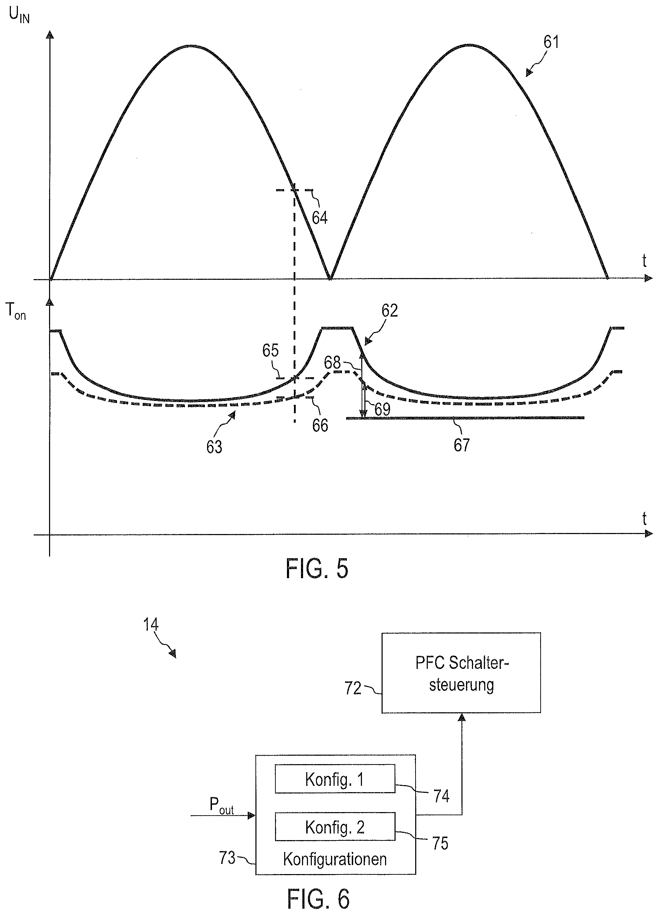

Figur 5 illustriert schematisch die Wirkungsweise einer Leistungsfaktorkorrekturschaltung nach einem Ausführungsbeispiel. Der Leistungsfaktorkorrekturschaltung wird eine Eingangsspannung 61 zugeführt, die eine gleichgerichtete Wechselspannung sein kann.

Eine Einschaltdauer, für die der Schalter 24 in den Ein-Zustand geschaltet wird, um Energie in der Induktivität 21 zu speichern, wird abhängig von der Eingangsspannung ermittelt. Die Abhängigkeit der Einschaltdauer von der Eingangsspannung wird durch die Konfiguration der Steuereinrichtung bestimmt. Beispielsweise kann die Dauer $T_{on,add}$ eines Zusatzintervalls, um das die von einem Regler bestimmte Ein-Zeit 66 verlängert werden soll, abhängig vom Wert der Eingangsspannung gemäß einer Tabelle oder einer Prozedur bestimmt werden, die von der Konfiguration der Steuereinrichtung 14 und somit von der Last am Ausgang der Leistungsfaktorkorrekturschaltung abhängt. Dadurch kann die Verringerung der THD, die durch die Steuereinrichtung 14 erreicht wird, adaptiv an unterschiedliche Ausgangsleistungen angepasst werden.

Figur 5 zeigt eine Einschaltdauer 62 für eine erste Konfiguration der Steuereinrichtung 14 als Funktion der Zeit. Figur 5 zeigt eine Einschaltdauer 63 für eine zweite Konfiguration der Steuereinrichtung 14 als Funktion der Zeit. Die Einschaltdauer für die erste Konfiguration und die zweite Konfiguration hängen auf unterschiedliche Weise von der Eingangsspannung ab. Beispielswiese ist für denselben Wert 64 der Eingangsspannung die Einschaltdauer 65 für die erste Konfiguration von der Einschaltdauer 66 für die zweite Konfiguration verschieden.

Die Einschaltdauer kann für jede der unterschiedlichen Konfigurationen jeweils ermittelt werden, indem ein Wert 67 für die Ein-Zeit, der von einem Regler bestimmt werden kann, um ein Zusatzintervall 68, 69 verlängert wird. Das Zusatzintervall 68, 69 kann für unterschiedliche Konfigurationen bei derselben Eingangsspannung unterschiedlich sein. Der Regler, der den Wert 67 für die Ein-Zeit bestimmt, kann eingerichtet sein, um eine Ausgangsspannung der Leistungsfaktorkorrekturschaltung oder eine andere Ausgangskreisgröße auf einen Sollwert zu regeln. Das Zusatzintervall 68, 69 kann für unterschiedliche Konfigurationen der Steuereinrichtung 14 bei jeder Eingangsspannung unterschiedlich sein. Das Zusatzintervall 68, 69 kann für unterschiedliche Konfigurationen der Steuereinrichtung 14 unterschiedliche Abhängigkeiten von der Eingangsspannung aufweisen.

Die Bestimmung des Zusatzintervalls 68, 69 kann kennfeldbasiert erfolgen. Die Steuereinrichtung 14 kann das zu verwendende Kennfeld abhängig von dem Wert 67 für die Ein-Zeit, der von dem Regler bestimmt wird, oder einem anderen Signalwert, der die Ausgangsleistung repräsentiert, festlegen. Die Bestimmung des Zusatzintervalls 68, 69 kann durch eine Rechenoperation erfolgen, wobei wenigstens ein Parameter der Rechenoperation abhängig von dem Wert 67 für die Ein-Zeit, der von dem Regler bestimmt wird, oder einem anderen Signalwert, der die Ausgangsleistung repräsentiert, festgelegt werden kann.

Figur 6 zeigt eine Blockdarstellung einer Steuereinrichtung 14, die bei einer Leistungsfaktorkorrekturschaltung nach einem Ausführungsbeispiel verwendet werden kann.

Die Steuereinrichtung 14 umfasst eine Schaltersteuerung 72 für eine Leistungsfaktorkorrekturschaltung. Die Schaltersteuerung 72 kann bestimmen, für welche Einschaltdauer ein Schaltmittel der Leistungsfaktorkorrekturschaltung jeweils in einen Ein-Zustand geschaltet wird. Die Schaltersteuerung 72 kann ein Steuersignal zum Steuern des Schaltmittels aussteuern.

Die Steuereinrichtung 14 kann eine Einrichtung 73 aufweisen, die Parameter für mehrere unterschiedliche Konfigurationen der Steuereinrichtung 14 aufweist und eingerichtet ist, um eine der Konfigurationen auszuwählen. Die unterschiedlichen Konfigurationen der Steuereinrichtung 14 können sich darin unterscheiden, wie die Einschaltdauer und/oder Ausschaltdauer des Schalters der Leistungsfaktorkorrekturschaltung in Abhängigkeit von der Eingangsspannung verändert wird. Die Einrichtung 73 kann Parameter 74 für eine erste Konfiguration und weitere Parameter 75 für eine zweite Konfiguration der Steuereinrichtung 14 umfassen. Die Parameter 74 können eine Tabelle, die zum Bestimmen der Einschaltdauer in der ersten Konfiguration verwendet wird, umfassen. Die Parameter 74 können die Dauer eines Zusatzintervalls, um das eine von einem Regler bestimmte Ein-Zeit $T_{on,0}$ in der ersten Konfiguration verlängert wird, in Abhängigkeit von der Eingangsspannung der Leistungsfaktorkorrekturschaltung definieren. Die weiteren Parameter 75 können eine weitere Tabelle, die zum Bestimmen der Einschaltdauer in der zweiten Konfiguration verwendet wird, umfassen. Die weiteren Parameter 75 können die Dauer eines Zusatzintervalls, um das eine von einem Regler bestimmte Ein-Zeit $T_{on,0}$ in der zweiten Konfiguration verlängert wird, in Abhängigkeit von der Eingangsspannung der Leistungsfaktorkorrekturschaltung definieren.

Eine Auswahl der Konfiguration kann abhängig von der Last am Ausgang der Leistungsfaktorkorrekturschaltung erfolgen. Die Auswahl der Konfiguration kann abhängig von einem analogen oder digitalen Signalwert $P_{out}$ erfolgen, der von einer Ausgangsleistung der Leistungsfaktorkorrekturschaltung abhängt. Der Signalwert $P_{out}$ kann beispielsweise die von einem Regler bestimmte Ein-Zeit $T_{on,0}$ sein, die näherungsweise proportional zur Ausgangsleistung der Leistungsfaktorkorrekturschaltung ist.

An die Schaltersteuerung 72 können diejenigen Parameter von der Einrichtung 73 bereitgestellt werden, die der Konfiguration entsprechen, die abhängig von der Last festgelegt wurde. Beispielsweise kann diejenige Tabelle und/oder diejenige Rechenvorschrift zum Bestimmen des Zusatzintervalls verwendet werden, die für die aktuelle Ausgangsleistung unter den verschiedenen Konfigurationen die geringste gesamte harmonische Verzerrung erzielt.

Die Schaltersteuerung 72 und/oder die Einrichtung 73 zum Auswählen der Konfiguration können jeweils als integrierte Halbleiterschaltung ausgestaltet sein, beispielsweise als Controller oder als ASIC. Die Schaltersteuerung 72 und/oder die Einrichtung 73 zum Auswählen der Konfiguration können integral ausgebildet sein.

Als Signalwert $P_{out}$, der die Ausgangsleistung der Leistungsfaktorkorrekturschaltung repräsentiert und der zum Bestimmen der besten Konfiguration zur Steuerung des Schalters herangezogen werden kann, kann die von einem Regler bestimmte Ein-Zeit $T_{on,0}$ verwendet werden. Die Ausgangsleistung ist zu dieser Ein-Zeit näherungsweise proportional.

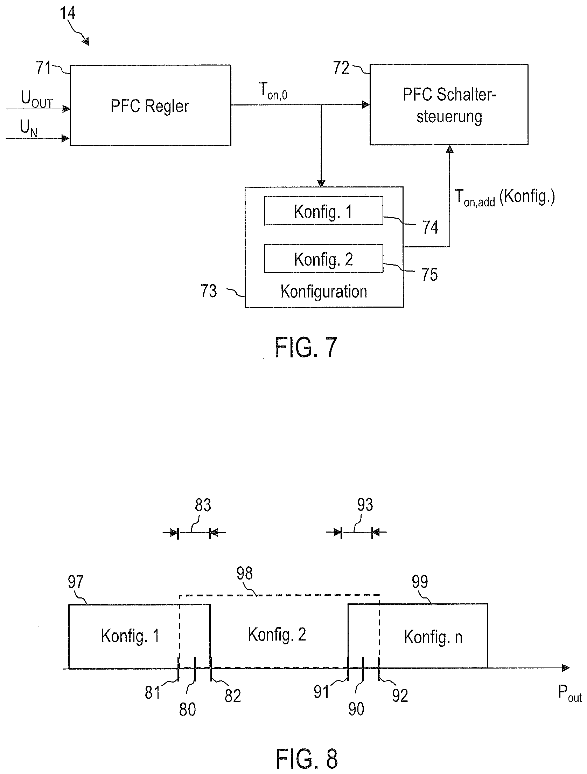

Figur 7 zeigt eine Blockdarstellung einer Steuereinrichtung 14, die bei einer Leistungsfaktorkorrekturschaltung nach einem Ausführungsbeispiel verwendet werden kann.

Die Steuereinrichtung 14 umfasst eine Schaltersteuerung 72 und eine Einrichtung 73, die Parameter für mehrere unterschiedliche Konfigurationen der Steuereinrichtung 14 aufweist, wie sie unter Bezugnahme auf Figur 6 beschrieben wurden. Die Steuereinrichtung 14 umfasst einen Regler 71. Der Regler 71 kann in einer Regelschleife die Ein-Zeit $T_{on,0}$ für den Schalter festlegen, die noch um das Zusatzintervall $T_{on,add}$ zur Verringerung der gesamten harmonischen Verzerrung verlängert wird. Der Regler 71 kann die Ein-Zeit $T_{on,0}$ abhängig von einem Vergleich zwischen einer erfassten Ausgangsspannung $U_{OUT}$ der Leistungsfaktorkorrekturschaltung und einem Sollwert $U_N$ bestimmen. Die Ein-Zeit $T_{on,0}$ für den Schalter, die noch um das Zusatzintervall $T_{on,add}$ zur Verringerung der der gesamten harmonischen Verzerrung verlängert wird, kann die Stellgröße der Regelschleife des Reglers 71 sein. Die Regelschleife kann auch eine andere Ausgangskreisgröße als die Ausgangsspannung $U_{OUT}$ der Leistungsfaktorkorrekturschaltung als Regelgröße verwenden.

Die Ein-Zeit $T_{on,0}$ für den Schalter, die von dem Regler 71 bestimmt wird, kann der Einrichtung 73 zugeführt werden. Abhängig von der Ein-Zeit $T_{on,0}$ kann die Einrichtung 73 bestimmen, welche Konfiguration verwendet werden soll. Die Einrichtung 73 kann die Ein-Zeit $T_{on,0}$ für den Schalter, die von dem Regler 71 bestimmt wird, mit wenigstens einem Schwellenwert vergleichen.

Die Schaltersteuerung 72 kann die Ein-Zeit $T_{on,0}$ von dem Regler 71 erhalten. Die Schaltersteuerung 72 kann die Einschaltdauer des Schalters bestimmen, indem sie die Ein-Zeit $T_{on,0}$, die von dem Regler 71 bestimmt wird, um ein Zusatzintervall verlängert, das von der aktuellen Eingangsspannung und der lastabhängig festgelegten Konfiguration abhängt.

Der Regler 71, die Schaltersteuerung 72 und/oder die Einrichtung 73 zum Definieren der Konfigurationen können jeweils als integrierte Halbleiterschaltung ausgestaltet sein, beispielsweise als Controller oder als eine anwendungsspezifische Spezialschaltung. Der Regler 71, die Schaltersteuerung 72 und/oder die Einrichtung 73 können integral ausgebildet sein, beispielsweise als ein Controller oder als eine anwendungsspezifische Spezialschaltung.

Ein Wechsel zwischen unterschiedlichen Konfigurationen kann im laufenden Betrieb der Leistungsfaktorkorrekturschaltung erfolgen. Dadurch kann die Leistungsfaktorkorrektur dynamisch an Laständerungen angepasst werden, beispielsweise wenn der Dimmlevel eines Leuchtmittels geändert wird. Ob ein Wechsel zwischen Konfigurationen ausgeführt werden soll, kann jeweils durch einen Schwellenwertvergleich eines Signalwerts, der von der Ausgangsleistung der Leistungsfaktorkorrekturschaltung abhängt, bestimmt werden. Dabei kann eine hysteretisches Wechseln zwischen unterschiedlichen Konfigurationen verwendet werden, wie anhand von Figur 8 beschrieben wird.

Figur 8 veranschaulicht einen Wechsel zwischen einer ersten Konfiguration 97, einer zweiten Konfiguration 98 und einer n-ten Konfiguration 99 einer Steuereinrichtung für eine Leistungsfaktorkorrekturschaltung.

Ein Signalwert $P_{out}$, der von der Ausgangsleistung der Leistungsfaktorkorrekturschaltung abhängt, kann mit einem oder mehreren Schwellenwerten verglichen werden, um zu bestimmen, welche Konfiguration für die jeweilige Ausgangsleistung zur geringsten gesamten harmonischen Verzerrung führt. Der Signalwert $P_{out}$ kann beispielsweise die von einem Regler 71 ermittelte Ein-Zeit $T_{on,0}$ sein, die noch um ein von der Eingangsspannung abhängiges Zusatzintervall verlängert werden kann. Beispielsweise kann ein Wechsel zwischen der ersten Konfiguration 97 und der zweiten Konfiguration 98 bei einem Schwellenwert 80 erfolgen. Der Wechsel zwischen der zweiten Konfiguration 98 und der n-ten Konfiguration 99 kann bei einem weiteren Schwellenwert 90 erfolgen. Für eine Ausgangsleistung der Leistungsfaktorkorrekturschaltung, die kleiner als der Schwellenwert 80 ist, kann die erste Konfiguration 97 eine bessere, also kleinere gesamte harmonische Verzerrung erreichen als die zweite Konfiguration 98 oder die n-te Konfiguration 99. Für eine Ausgangsleistung der Leistungsfaktorkorrekturschaltung, die größer als der Schwellenwert 80 und kleiner als der weitere Schwellenwert 90 ist, kann die zweite Konfiguration 98 eine bessere, also kleinere gesamte harmonische Verzerrung erreichen als die erste Konfiguration 97 oder die n-te Konfiguration 99.

Es kann eine Hysterese 83, 93 für den Wechsel zwischen unterschiedlichen Konfigurationen verwendet werden. Beispielsweise kann der Signalwert $P_{out}$ mit einem ersten Schwellenwert 81 verglichen werden, um zu bestimmen, ob ein Wechsel von der zweiten Konfiguration 98 zu der ersten Konfiguration 97 erfolgen soll. Ein Wechsel von der zweiten Konfiguration 98 zu der ersten Konfiguration 97 kann vorgenommen werden, wenn der Signalwert $P_{out}$ den ersten Schwellenwert 81 unterschreitet. Der Signalwert $P_{out}$ kann mit einem zweiten Schwellenwert 82 verglichen werden, um zu bestimmen, ob ein Wechsel von der ersten Konfiguration 97 zu der zweiten Konfiguration 98 erfolgen soll. Ein Wechsel von der ersten Konfiguration 97 zu der zweiten Konfiguration 98 kann vorgenommen werden, wenn der Signalwert $P_{out}$ den zweiten Schwellenwert 82 übersteigt. Der zweite Schwellenwert 82 kann größer sein als der erste Schwellenwert 81. Eine Differenz zwischen dem zweiten Schwellenwert 82 und dem ersten Schwellenwert 81 kann die Hysterese 83 definieren.

Der Signalwert $P_{out}$ kann mit einem weiteren ersten Schwellenwert 91 verglichen werden, um zu bestimmen, ob ein Wechsel von der n-ten Konfiguration 99 zu der zweiten Konfiguration 98 erfolgen soll. Ein Wechsel von der n-ten Konfiguration 99 zu der zweiten Konfiguration 98 kann vorgenommen werden, wenn der Signalwert $P_{out}$ den weiteren ersten Schwellenwert 91 unterschreitet. Der Signalwert $P_{out}$ kann mit einem weiteren zweiten Schwellenwert 92 verglichen werden, um zu bestimmen, ob ein Wechsel von der zweiten Konfiguration 98 zu der n-ten Konfiguration 99 erfolgen soll. Ein Wechsel von der zweiten Konfiguration 98 zu der n-ten Konfiguration 99 kann vorgenommen werden, wenn der Signalwert $P_{out}$ den weiteren zweiten Schwellenwert 92 übersteigt. Der weitere zweite Schwellenwert 92 kann größer sein als der weitere erste Schwellenwert 91. Eine Differenz zwischen dem weiteren zweiten Schwellenwert 92 und dem weiteren ersten Schwellenwert 91 kann die Hysterese 93 definieren.

Während in Figur 8 schematisch drei unterschiedliche Konfigurationen 97-99 und Übergänge zwischen den drei unterschiedlichen Konfigurationen 97-99 der Steuereinrichtung 14 dargestellt sind, kann die Steuereinrichtung 14 auch nur zwei oder mehr als drei unterschiedliche Konfigurationen aufweisen. Die Anzahl unterschiedlicher Konfigurationen kann auch groß sein, beispielsweise wenn ein Parameter einer Rechenvorschrift zum Bestimmen des Zusatzintervalls abhängig von der Ausgangsleistung der Leistungsfaktorkorrekturschaltung angepasst wird.

Während Ausführungsbeispiele unter Bezugnahme auf die Figuren beschrieben wurden, können Abwandlungen bei weiteren Ausführungsbeispielen realisiert werden. Beispielsweise können die Funktionen der Steuereinrichtung 14 auch von mehreren separaten Schaltungen ausgeführt werden.

Während Ausführungsbeispiele beschrieben wurden, bei denen die Dauer $T_{on,add}$ des Zusatzintervalls, um das die von dem Regler bestimmte Ein-Zeit $T_{on,0}$ verlängert wird, abhängig von der Eingangsspannung gemäß der gerade aktive Konfiguration bestimmt wird, können die unterschiedlichen Konfigurationen auch zur Bestimmung einer anderen Größe bestimmt werden. Beispielsweise kann die Bestimmung einer Ausschaltdauer, für die der Schalter in den Aus-Zustand geschaltet wird, abhängig von der jeweils gewählten Konfiguration auf unterschiedliche Weise erfolgen.

Verfahren und Vorrichtungen nach Ausführungsbeispielen können bei Betriebsgeräten für Leuchtmittel, beispielsweise bei einem LED-Konverter, verwendet werden.

**Patentansprüche**

1. Leistungsfaktorkorrekturschaltung, umfassend:

   einen Eingang zum Empfangen einer Eingangsspannung ($U_{IN}$),
   ein Schaltmittel (24) und
   eine Steuereinrichtung (14), die wenigstens zwei unterschiedliche Konfigurationen (97-99) zum Steuern des Schaltmittels (24) abhängig von der Eingangsspannung ($U_{IN}$) aufweist, wobei eine Konfiguration aus den wenigstens zwei unterschiedlichen Konfigurationen (97-99) in Abhängigkeit von einer Last (3, 12) an einem Ausgang der Leistungsfaktorkorrekturschaltung (11) auswählbar ist,

wobei eine Einschaltdauer (42, 43; 62, 63), für die die Steuereinrichtung (14) das Schaltmittel (24) in einen Ein-Zustand schaltet, und/oder eine Ausschaltdauer, für die die Steuereinrichtung (14) das Schaltmittel (24) in einen Aus-Zustand schaltet, bei wenigstens einem Wert der Eingangsspannung (61) für die wenigstens zwei unterschiedlichen Konfigurationen (97-99) verschieden ist,
**dadurch gekennzeichnet, dass**
die Steuereinrichtung (14) eingerichtet ist, um eine Ein-Zeit (66; $T_{on,0}$) um ein Zusatzintervall (68, 69) zu verlängern, um die Einschaltdauer (42, 43; 62, 63) zu bestimmen,
wobei das Zusatzintervall (68, 69) bei wenigstens einem Wert der Eingangsspannung für die wenigstens zwei unterschiedlichen Konfigurationen (97-99) verschieden ist, und
wobei das Zusatzintervall (68, 69) für die wenigstens zwei unterschiedlichen Konfigurationen (97-99) eine unterschiedliche Abhängigkeit von der Eingangsspannung aufweist.

2. Leistungsfaktorkorrekturschaltung nach Anspruch 1,
wobei die Einschaltdauer (42, 43; 62, 63) und/oder die Ausschaltdauer für die wenigstens zwei unterschiedlichen Konfigurationen (97-99) eine unterschiedliche Abhängigkeit von der Eingangsspannung (61) aufweist.

3. Leistungsfaktorkorrekturschaltung nach Anspruch 1 oder Anspruch 2,
wobei die Steuereinrichtung (14) eingerichtet ist, um eine Tabelle zum Bestimmen des Zusatzintervalls (68, 69) abhängig von der Last aus mehreren Tabellen (74, 75) auszuwählen.

4. Leistungsfaktorkorrekturschaltung nach einem Ansprüche 1 bis 3,
umfassend wenigstens eine integrierte Halbleiterschaltung (71-73) zum Bestimmen der Ein-Zeit (66; $T_{on,0}$) und/oder zum Bestimmen des Zusatzintervalls (68, 69).

5. Leistungsfaktorkorrekturschaltung nach einem der vorhergehenden Ansprüche,
wobei die Steuereinrichtung (14) eingerichtet ist, um einen von der Last abhängigen Signalwert ($P_{out}$; $T_{on,0}$) wiederholt, insbesondere periodisch, abzufragen und um abhängig von dem Signalwert ($P_{out}$; $T_{on,0}$) zu bestimmen, ob die Konfiguration (97-99) zu wechseln ist.

6. Leistungsfaktorkorrekturschaltung nach Anspruch 5,
wobei der Signalwert ($P_{out}$; $T_{on,0}$) eine Ausgangsleistung der Leistungsfaktorkorrekturschaltung (11) repräsentiert.

7. Leistungsfaktorkorrekturschaltung nach Anspruch 5 oder Anspruch 6,
wobei die wenigstens zwei unterschiedlichen Konfigurationen (97-99) eine erste Konfiguration (97) und eine zweite Konfiguration (98) umfassen,
wobei die Steuereinrichtung (14) eingerichtet ist, um von der zweiten Konfiguration (98) zur ersten Konfiguration (97) zum Steuern des Schaltmittels (24) zu wechseln, wenn der Signalwert einen ersten Schwellenwert (81) unterschreitet, und um von der ersten Konfiguration (97) zur zweiten Konfiguration (98) zum Steuern des Schaltmittels (24) zu wechseln, wenn der Signalwert einen zweiten Schwellenwert (82) übersteigt, der größer als der erste Schwellenwert (81) ist.

8. Leistungsfaktorkorrekturschaltung nach einem der vorhergehenden Ansprüche, umfassend
eine mit dem Eingang gekoppelte Induktivität (21), wobei das Schaltmittel (24) steuerbar ist, um die Induktivität (21) wahlweise zu laden und zu entladen.

9. Betriebsgerät für ein Leuchtmittel, umfassend
die Leistungsfaktorkorrekturschaltung (11) nach einem der vorhergehenden Ansprüche.

10. Verfahren zum Steuern einer Leistungsfaktorkorrekturschaltung (11), die einen Eingang zum Empfangen einer Eingangsspannung ($U_{IN}$), ein Schaltmittel (24) und eine Steuereinrichtung (14) zum Steuern des Schaltmittels (24) umfasst, wobei das Verfahren umfasst:

Auswählen einer Konfiguration aus wenigstens zwei unterschiedlichen Konfigurationen (97-99) der Steuereinrichtung (14), wobei die Konfiguration abhängig von einer Last (3, 12) an einem Ausgang der Leistungsfaktorkorrekturschaltung (11) ausgewählt wird, und
zeitabhängiges Steuern des Schaltmittels (24) durch die Steuereinrichtung (14) abhängig von der Eingangsspannung ($U_{IN}$) gemäß der ausgewählten Konfiguration,

wobei eine Einschaltdauer (42, 43; 62, 63), für die die Steuereinrichtung (14) das Schaltmittel (24) in einen Ein-Zustand schaltet, und/oder eine Ausschaltdauer, für die die Steuereinrichtung (14) das Schaltmittel (24) in einen Aus-Zustand schaltet, bei wenigstens einem Wert der Eingangsspannung (61) für die wenigstens zwei unterschiedlichen Konfigurationen (97-99) verschieden ist,

**gekennzeichnet durch**

Verlängern einer Ein-Zeit (66; $T_{on,0}$) um ein Zusatzintervall (68, 69) durch die Steuereinrichtung (14), um die Einschaltdauer (42, 43; 62, 63) zu bestimmen,

wobei das Zusatzintervall (68, 69) bei wenigstens einem Wert der Eingangsspannung für die wenigstens zwei unterschiedlichen Konfigurationen (97-99) verschieden ist, und

wobei das Zusatzintervall (68, 69) für die wenigstens zwei unterschiedlichen Konfigurationen (97-99) eine unterschiedliche Abhängigkeit von der Eingangsspannung aufweist.

**11.** Verfahren nach Anspruch 10,
wobei das Verfahren von einer Leistungsfaktorkorrekturschaltung (11) nach einem der Ansprüche 1-8 ausgeführt wird.

**Claims**

**1.** A power factor correction circuit, comprising
an input for receiving an input voltage ($U_{IN}$),
a switching means (24) and
a control device (14), that has at least two different configurations (97-99) for controlling the switching means (24) depending on the input voltage ($U_{IN}$), wherein a configuration can be selected from the at least two different configurations (97-99) depending on a load (3, 12) at an output of the power factor correction circuit (11),
wherein a switched-on duration (42, 43; 62, 63), for which the control device (14) switches the switch means (24) into an on-state, and/or a switched-off duration, for which the control device (14) switches the switch means (24) into an off-state, is different in the case of at least one value of the input voltage (61) for the at least two different configurations (97-99),
**characterized in that**
the control device is adapted, in order to lengthen an on-time (66; $T_{on,0}$) by an additional interval (68, 69), in order to determine the switched-on duration (42, 43; 62, 63),
wherein the additional interval (68, 69) is different in the case of at least one value of the input voltage for the at least two different configurations (97-99), and
wherein the additional interval (68, 69) for the at least two different configurations (97-99) has a different dependence on the input voltage.

**2.** A power factor correction circuit according to Claim 1,
wherein the switched-on duration (42, 43; 62, 63) and/or the switched-off duration for the at least two different configurations (97-99) has a different dependence on the input voltage (61).

**3.** A power factor correction circuit according to Claim 1 or Claim 2,
wherein the control device (14) is adapted, in order to select a table for determining the additional interval (68, 69) depending on the load from multiple tables (74,75).

**4.** A power factor correction circuit according to any one of Claims 1 to 3,
comprising at least one integrated semiconductor circuit (71-73) for determining the on-time (66; $T_{on,0}$) and/or for determining the additional interval (68, 69).

**5.** A power factor correction circuit according to any one of the preceding claims,
wherein the control device (14) is adapted, in order to repeat a signal value ($P_{out}$; $T_{on,0}$) depending on the load, in particular periodically to query and to determine depending on the signal value ($P_{out}$; $T_{on,0}$), whether the configuration (97-99) must be changed.

**6.** A power factor correction circuit according to Claim 5,
wherein the signal value ($P_{out}$; $T_{on,0}$) represents an output power of the power factor correction circuit (11).

**7.** A power factor correction circuit according to Claim 5 or Claim 6,
wherein the at least two different configurations (97-99) comprise a first configuration (97) and a second configuration (98),
wherein the control device (14) is adapted in order to change from the second configuration (98) to the first configuration (97) for controlling the switching means (24), if the signal value falls below a first threshold value (81), and in order to change from the first configuration (97) to the second configuration (98) for controlling the switching means (24), if the signal value exceeds a second threshold value (82), which is greater than the first threshold value (81).

**8.** A power factor correction circuit according to any one of the preceding claims, comprising
an inductor (21) coupled with the input, wherein the switching means (24) is controllable, in order optionally to load and to unload the inductor (21).

**9.** An operating device for an illuminant, comprising
the power factor correction circuit (11) according to any one of the preceding claims.

**10.** A method for controlling a power factor correction circuit (11), which comprises an input for receiving an input voltage ($U_{IN}$), a switching means (24) and a control device (14) for controlling the switching means (24), wherein the method comprises:

Selection of a configuration from at least two different configurations (97-99) of the control device (14), wherein the configuration is selected depending on a load (3, 12) at an output of the power factor correction circuit (11), and time-dependent controlling of the switching means (24) by the control device (14) depending on the input voltage ($U_{IN}$) according to the selected configuration,

wherein a switched-on duration (42, 43; 62, 63), for which the control device (14) of the switching means (24) switches into an on-state, and/or a switched-off duration, for which the control device (14) switches the switching means (24) into an off-state, is different in the case of at least one value of the input voltage (61) for the at least two different configurations (97-99),
**characterized by**
lengthening of an on-time (66; $T_{on,0}$) by an additional interval (68, 69) by the control device (14) in order to determine the switched-on duration (42, 43; 62, 63),
wherein the additional interval (68, 69) is different in the case of at least one value of the input voltage for the at least two different configurations (97-99), and
wherein the additional interval (68, 69) for the at least two different configurations (97-99) has a different dependence on the input voltage.

**11.** A method according to Claim 10,
wherein the method of a power factor correction circuit (11) is executed according to any one of Claims 1-8.

**Revendications**

**1.** Circuit de correction de facteur de puissance comprenant :

une entrée pour la réception d'une tension d'entrée ($U_{IN}$),
un moyen de commutation (24) et
un dispositif de commande (14), qui comprend au moins deux configurations différentes (97 - 99) pour le contrôle du moyen de commutation (24) en fonction de la tension d'entrée ($U_{IN}$), une configuration parmi les au moins deux configurations différentes (97 - 99) pouvant être sélectionnée en fonction d'une charge (3, 12) à la sortie du circuit de correction de facteur de puissance (11),

une durée d'activation (42, 43 ; 62, 63) pendant laquelle le dispositif de commande (14) commute le moyen de commutation (24) dans un état activé et/ou une durée de désactivation pendant laquelle le dispositif de commande (14) commute le moyen de commutation (24) dans un état désactivé étant différente, dans le cas d'au moins une valeur de la tension d'entrée (61) pour les au moins deux configurations différentes (97 - 99),
**caractérisé en ce que**
le dispositif de commande (14) est conçu pour prolonger un temps d'activation (66 ; $T_{on,0}$) d'un intervalle supplémentaire (68, 69), afin de déterminer la durée d'activation (42, 43 ; 62, 63),

l'intervalle supplémentaire (68, 69) étant différent dans le cas d'au moins une valeur de la tension d'entrée pour les au moins deux configurations différentes (97 - 99) et

l'intervalle supplémentaire (68, 69) présentant, pour les au moins deux configurations différentes (97 - 99), une dépendance différente en fonction de la tension d'entrée.

2.  Circuit de correction de facteur de puissance selon la revendication 1,
la durée d'activation (42, 43 ; 62, 63) et/ou la durée de désactivation pour les au moins deux configurations différentes (97 - 99) présentant une dépendance différente en fonction de la tension d'entrée (61).

3.  Circuit de correction de facteur de puissance selon la revendication 1 ou la revendication 2,
le dispositif de commande (14) étant conçu pour sélectionner un tableau pour la détermination de l'intervalle supplémentaire (68, 69) en fonction de la charge parmi plusieurs tableaux (74, 75).

4.  Circuit de correction de facteur de puissance selon l'une des revendications 1 à 3,
comprenant au moins un circuit semi-conducteur intégré (71 - 73) pour la détermination du temps d'activation (66 ; $T_{on,0}$) et/ou pour la détermination de l'intervalle supplémentaire (68, 69).

5.  Circuit de correction de facteur de puissance selon l'une des revendications précédentes,
le dispositif de commande (14) étant conçu pour interroger de manière répétitive, plus particulièrement de manière périodique, une valeur de signal ($P_{out}$ ; $T_{on,0}$) dépendant de la charge et pour déterminer, en fonction de la valeur de signal ($P_{out}$ ; $T_{on,0}$), si la configuration (97 - 99) doit être changée.

6.  Circuit de correction de facteur de puissance selon la revendication 5,
la valeur de signal ($P_{out}$ ; $T_{on,0}$) représentant une puissance de sortie du circuit de correction de facteur de puissance (11).

7.  Circuit de correction de facteur de puissance selon la revendication 5 ou la revendication 6,
les au moins deux configurations différentes (97 - 99) comprenant une première configuration (97) et une deuxième configuration (98),
le dispositif de commande (14) étant conçu pour changer de la deuxième configuration (98) à la première configuration (97) pour le contrôle du moyen de commutation (24) lorsque la valeur de signal passe en dessous d'une première valeur seuil (81) et pour changer de la première configuration (97) à la deuxième configuration (98) pour le contrôle du moyen de commutation (24) lorsque la valeur de signal dépasse une deuxième valeur seuil (82) qui est supérieure à la première valeur seuil (81).

8.  Circuit de correction de facteur de puissance selon l'une des revendications précédentes, comprenant
une inductance (21) couplée avec l'entrée, le moyen de commutation (24) pouvant être contrôlé pour charger et décharger sélectivement l'inductance (21).

9.  Appareil de commande pour un moyen d'éclairage, comprenant
le circuit de correction de facteur de puissance (11) selon l'une des revendications précédentes.

10. Procédé de commande d'un circuit de correction de facteur de puissance (11) qui comprend une entrée pour la réception d'une tension d'entrée ($U_{IN}$), un moyen de commutation (24) et un dispositif de commande (14) pour le contrôle du moyen de commutation (24), le procédé comprenant :

la sélection d'une configuration parmi au moins deux configurations différentes (97-99) du dispositif de commande (14), la configuration étant sélectionné en fonction d'une charge (3, 12) à la sortie du circuit de correction de facteur de puissance (11) et
la commande en fonction du temps du moyen de commutation (24) par le dispositif de commande (14) en fonction de la tension d'entrée ($U_{IN}$) selon la configuration sélectionnée,

une durée d'activation (42, 43 ; 62, 63) pendant laquelle le dispositif de commande (14) commute le moyen de commutation (24) dans un état activé et/ou une durée de désactivation pendant laquelle le dispositif de commande (14) commute le moyen de commutation (24) dans un état désactivé étant différente, dans le cas d'au moins une valeur de la tension d'entrée (61) pour les au moins deux configurations différentes (97 - 99),
**caractérisé par**

l'allongement d'un temps d'activation (66 ; $T_{on,0}$) d'un intervalle supplémentaire (68, 69) par le dispositif de commande (14), afin de déterminer la durée d'activation (42, 43 ; 62, 63),

l'intervalle supplémentaire (68, 69) étant différent dans le cas d'au moins une valeur de la tension d'entrée pour les au moins deux configurations différentes (97 - 99) et

l'intervalle supplémentaire (68, 69) présentant, pour les au moins deux configurations différentes (97 - 99), une dépendance différente en fonction de la tension d'entrée.

11. Procédé selon la revendication 10,
le procédé étant exécuté par un circuit de correction de facteur de puissance (11) selon l'une des revendications 1 à 8.

FIG. 1

FIG. 2

FIG. 3

FIG. 4

$U_{IN}$

61

64

t

$T_{on}$

62

65

68

63

66

69

67

t

FIG. 5

14

PFC Schaltersteuerung

72

$P_{out}$

Konfig. 1

74

Konfig. 2

75

73

Konfigurationen

FIG. 6

14

71

$U_{OUT}$

$U_N$

PFC Regler

$T_{on,0}$

72

PFC Schaltersteuerung

Konfig. 1

74

Konfig. 2

75

73

Konfiguration

$T_{on,add}$ (Konfig.)

FIG. 7

83

93

97

98

99

Konfig. 1

Konfig. 2

Konfig. n

81

80

82

91

90

92

$P_{out}$

FIG. 8

**EP 3 069 436 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012007479 A1
- EP 2360824 A1
- CN 101702574 A
- US 20090303765 A1
- DE 102004051162 A1